# EUROPÄISCHE PATENTANMELDUNG

(11) **EP 0 692 438 A1**
(43) Veröffentlichungstag der Anmeldung: **17.01.1996**
(21) Anmeldenummer: 94106068.3
(22) Anmeldetag: 13.07.1994
(51) Int. Cl.: B65G 1/00, B65G 1/02

(54) **Rolltablar-Steckregal**

(71) Anmelder: Paul, Dieter, Dipl.-Ing., D-30883 Barsinghausen (DE)
(72) Erfinder: Paul, Dieter, Dipl.-Ing., D-30883 Barsinghausen (DE)

(57) **Zusammenfassung**

Ein storemaster Rolltablar-Steckregal System Roll-Y-Shelve besteht je nach Kundenwunsch aus einer bestimmten Anzahl von Regalfeldern, einer bestimmten Anzahl Rolltablare, sowie einer Kranlaufschiene mit einem elektrischen Ketten-Flaschenzug und Seilgeschirr.

Technische Daten:

| | |
|---|---|
| Max. Tragfähigkeit je Regal-Einschubplatz(= Rolltablar) | = 2.000 Kg |
| Standard-Tragfähigkeit je Regalfeld | = 6.000 Kg |
| Max. Tragfähigkeit je Regalfeld ,in Abhängigkeit vom Standrahmen-Profil | = 24.000 Kg |
| Max. mögliche Regalhöhe | = 9.000 mm |

## Beschreibung

storemasterRolltablar-Steckregal
System Roll-Y-Shelve.

Die Erfindung bezieht sich auf Regale, die zur Lagerung von schweren Werkzeugen und Teilen eingesetzt werden. Sie kommen häufig zum Einsatz an Werkzeugmaschinen, als auch an Förderstrecken von Fertigungs-und Montagestraßen.

Gegenstand der vorliegenden Erfindung ist ein Rolltablar-Steckregal, bestehend aus einem steckbaren Regal-Korpus, sowie aus beweglichen Rolltablaren.

Ein Vorteil eines solchen Regales ist sein geringer Platzbedarf, die hohe Tragfähigkeit, sowie die Anbindung an bestehende Fertigungs-Einrichtungen. Weiterhin ist der Regal-Korpus beliebig erweiterbar. Die Rolltablare sind so ausgelegt, daß sie stapelbar sind.

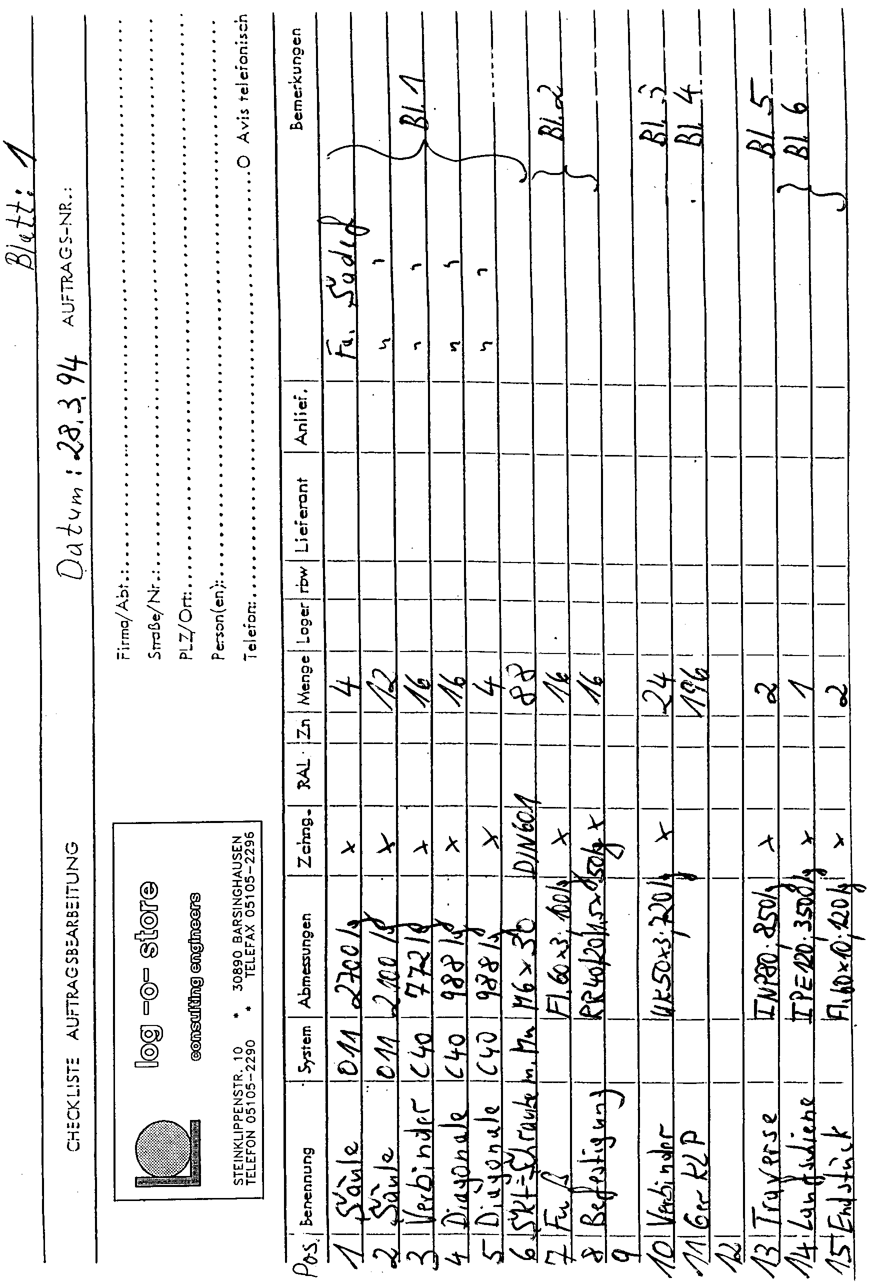

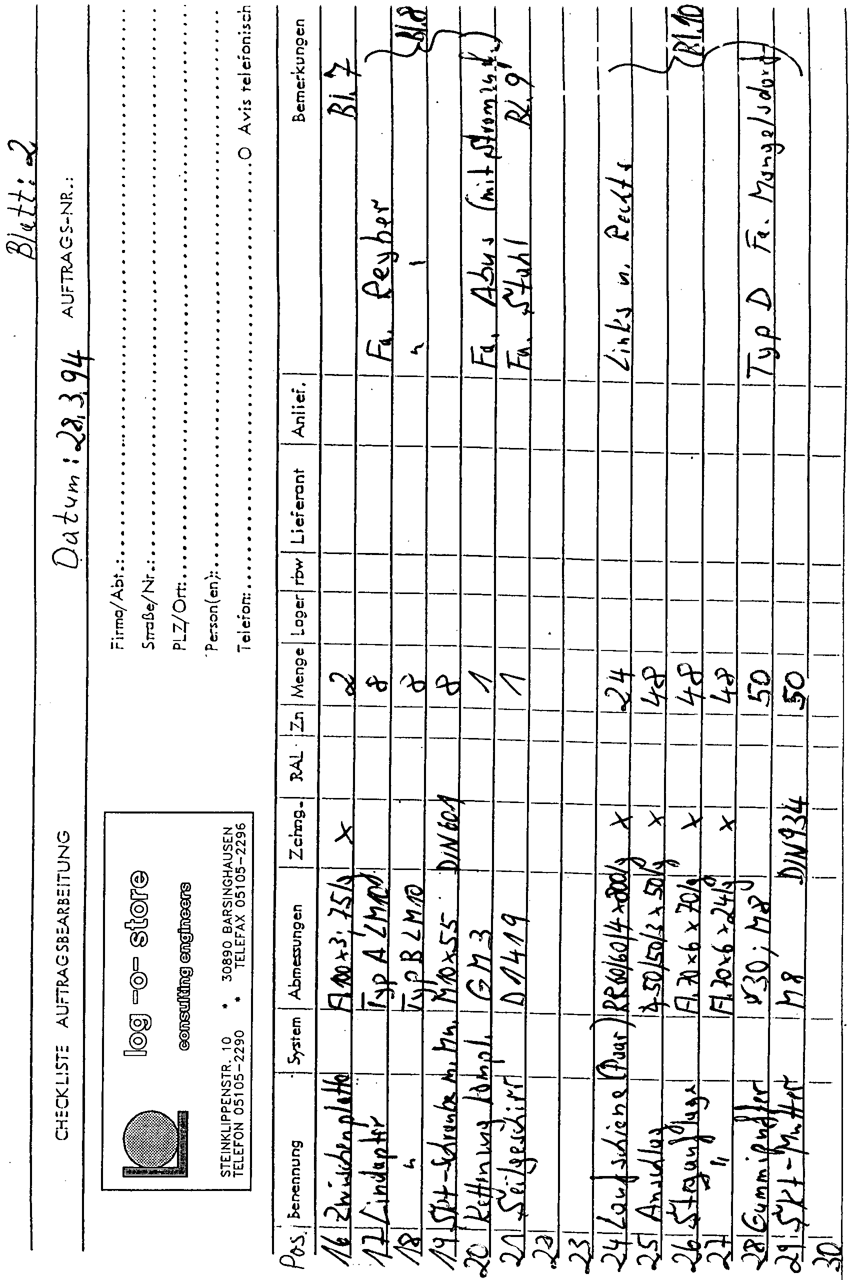

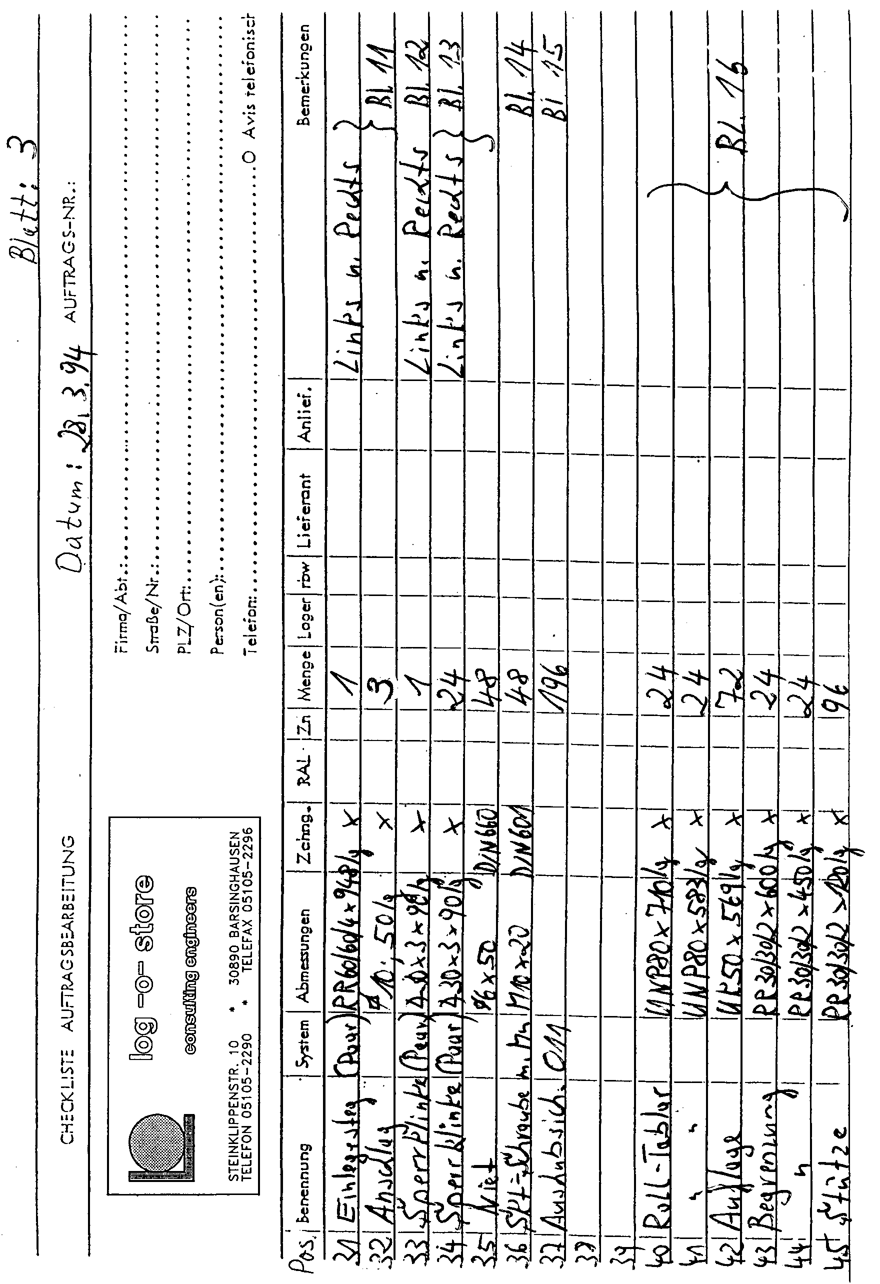

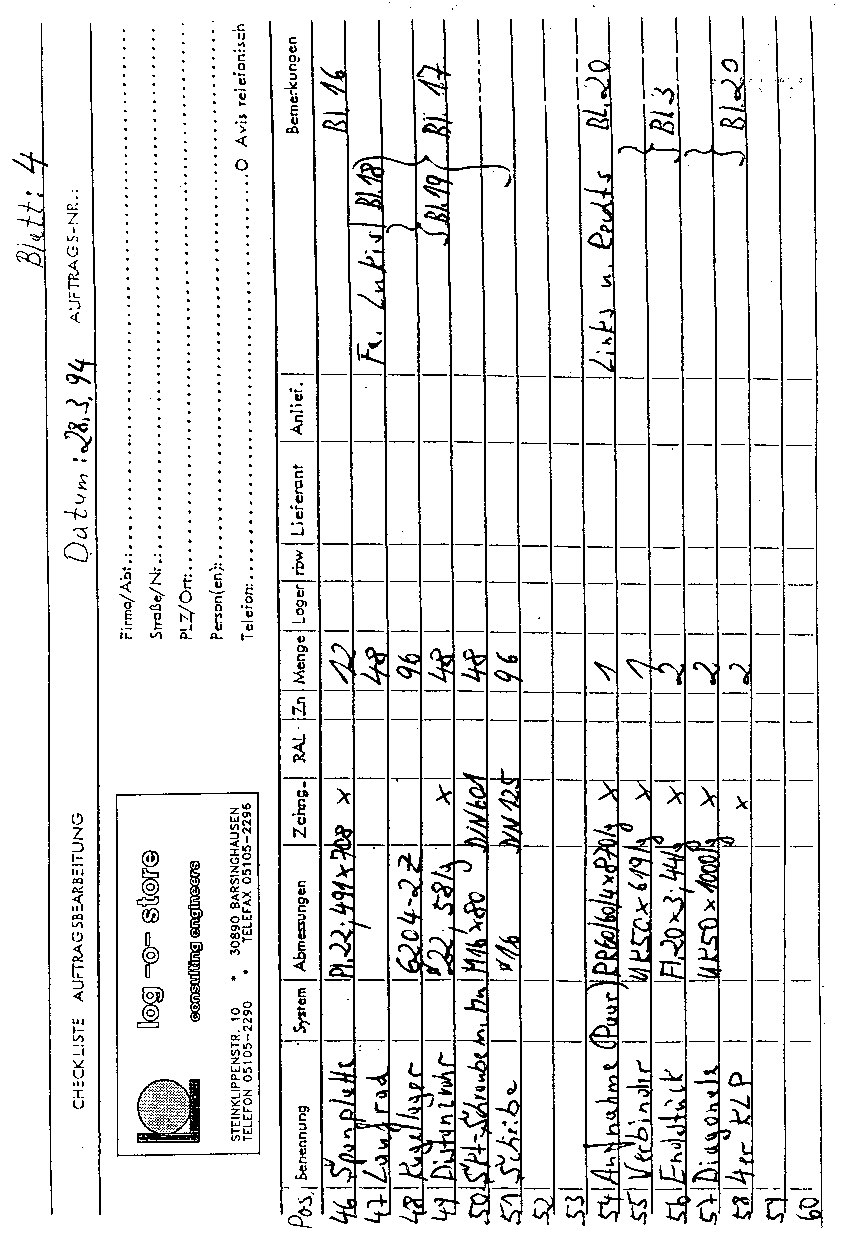

## Patentansprüche

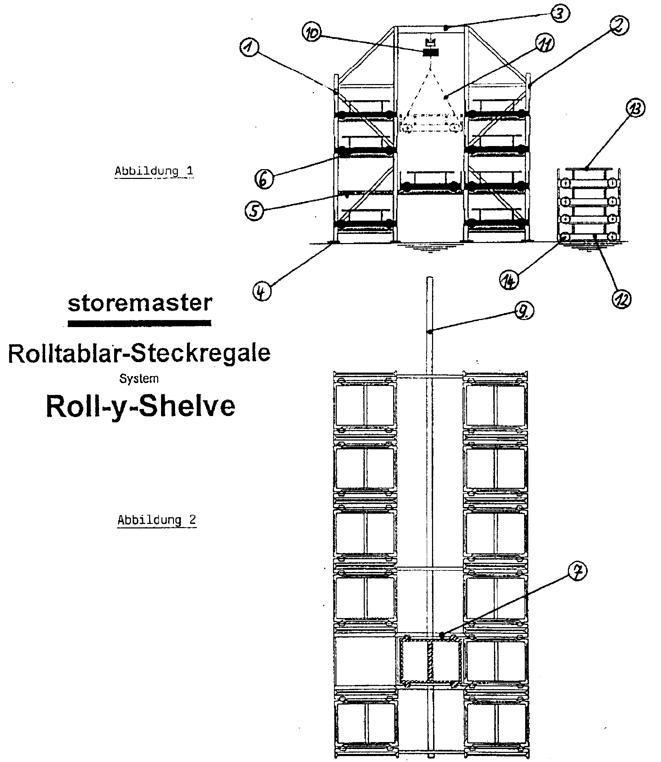

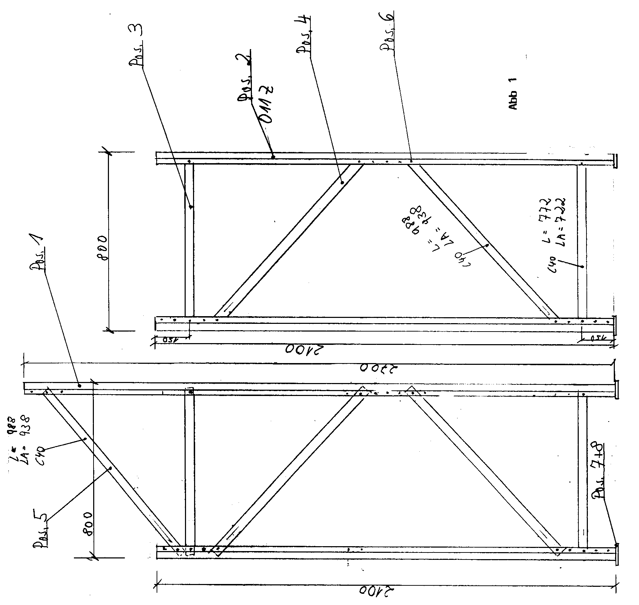

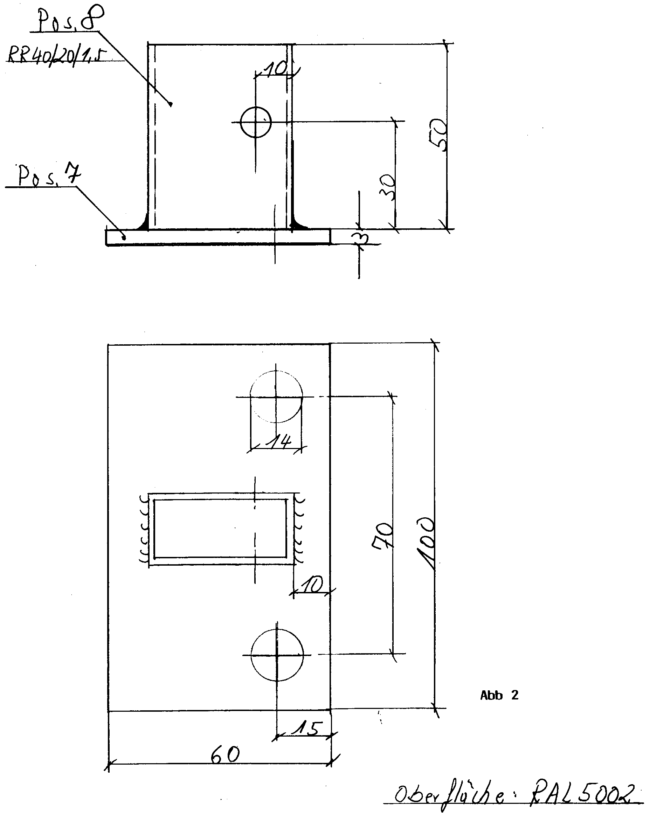

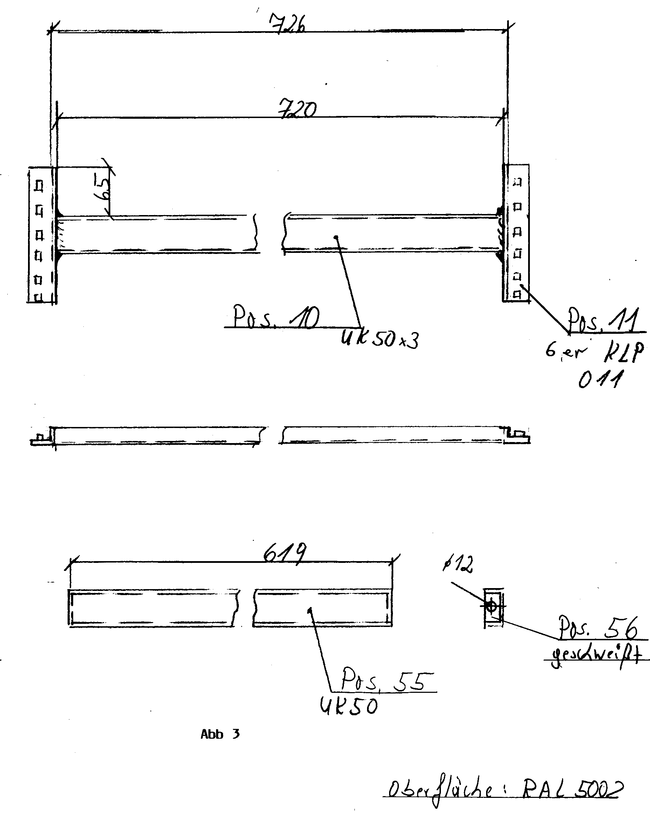

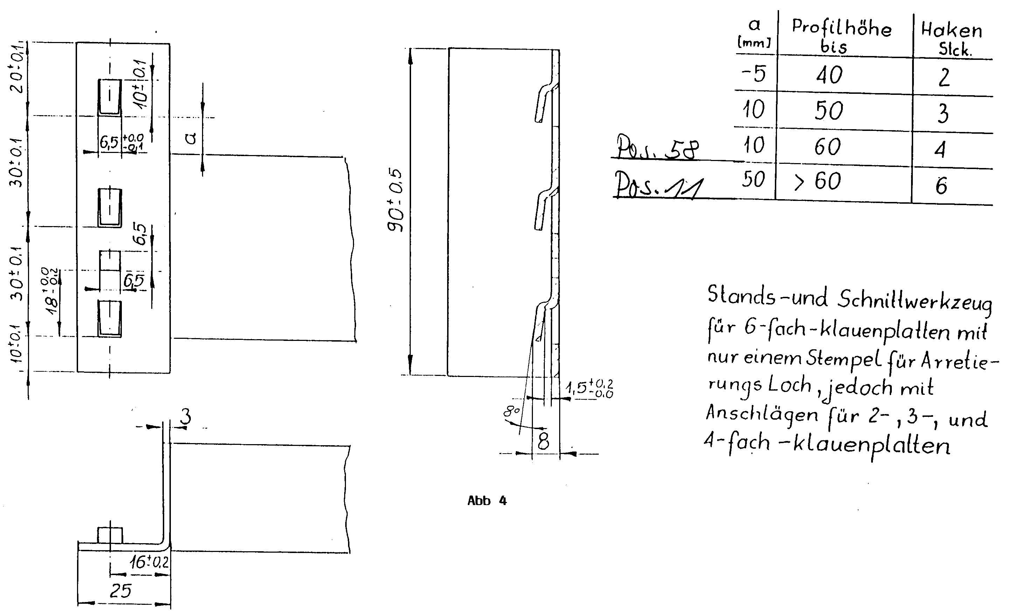

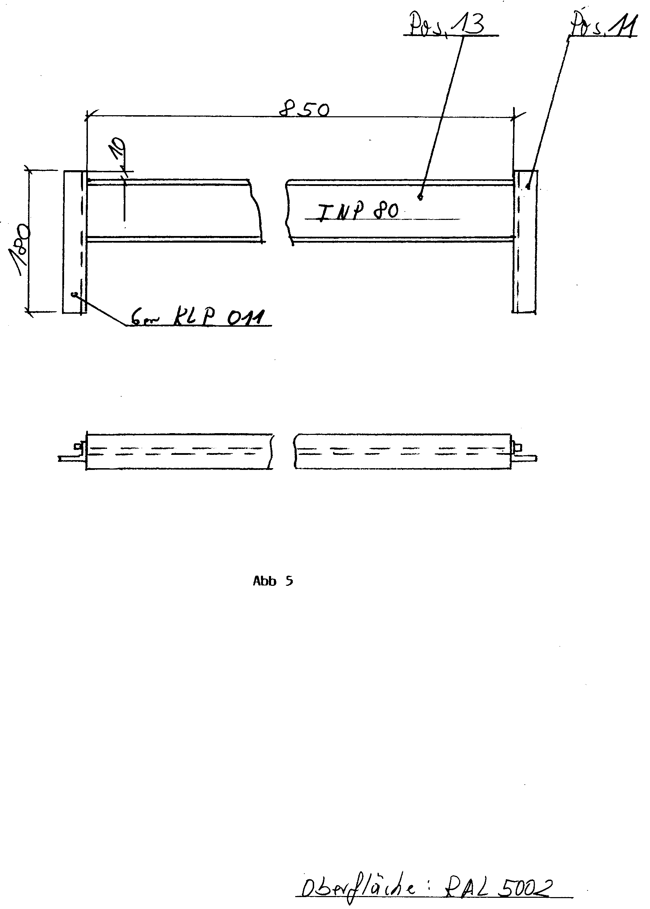

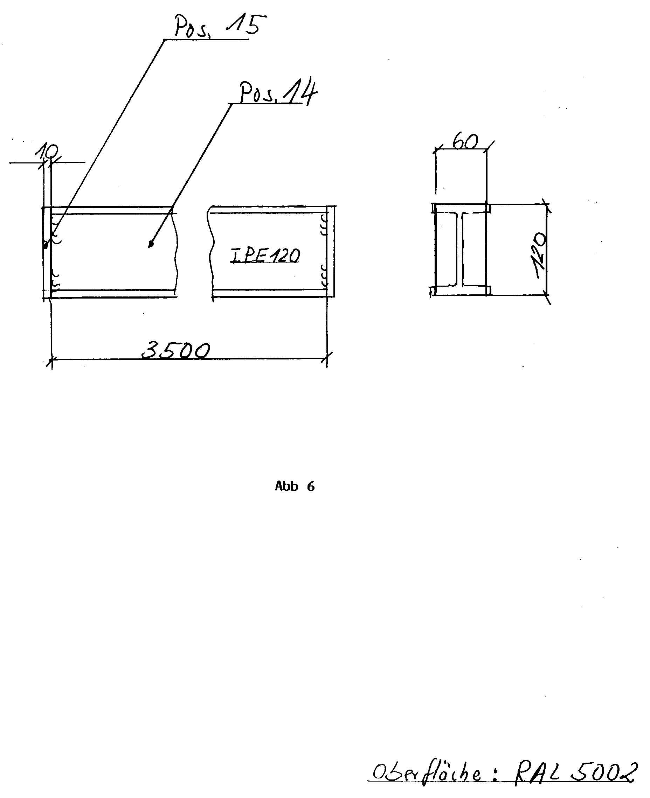

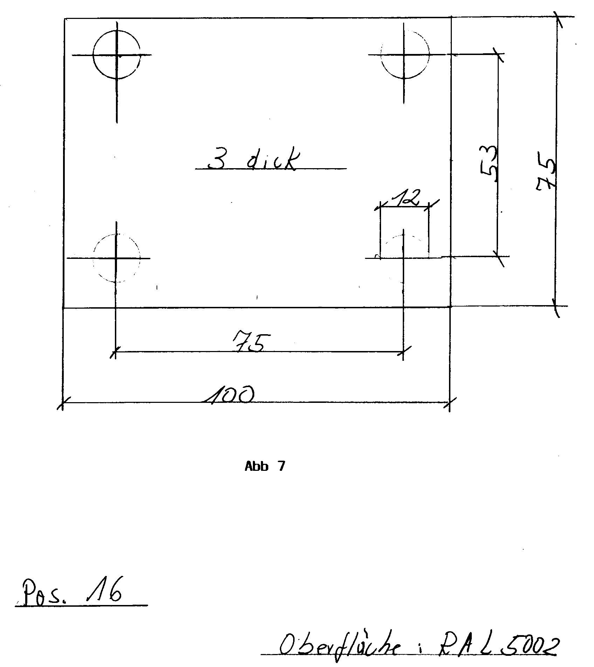

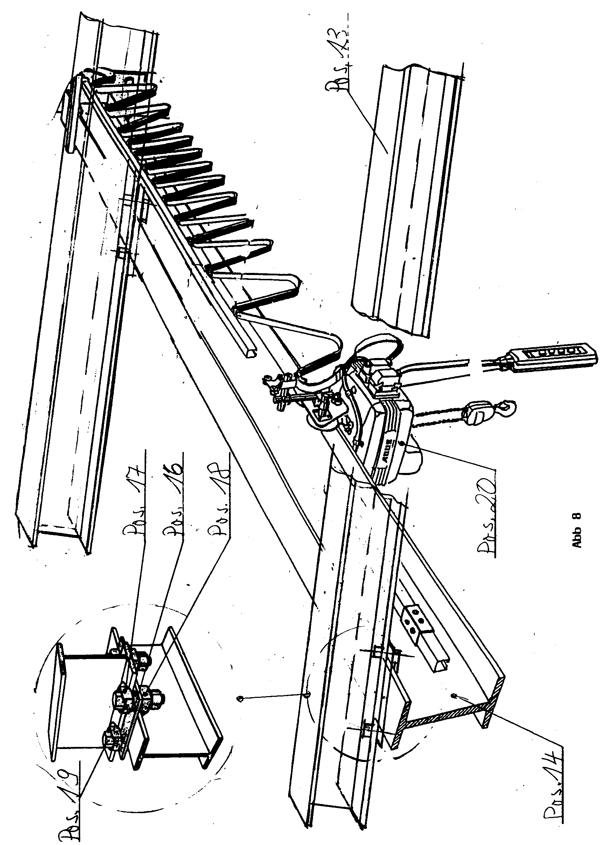

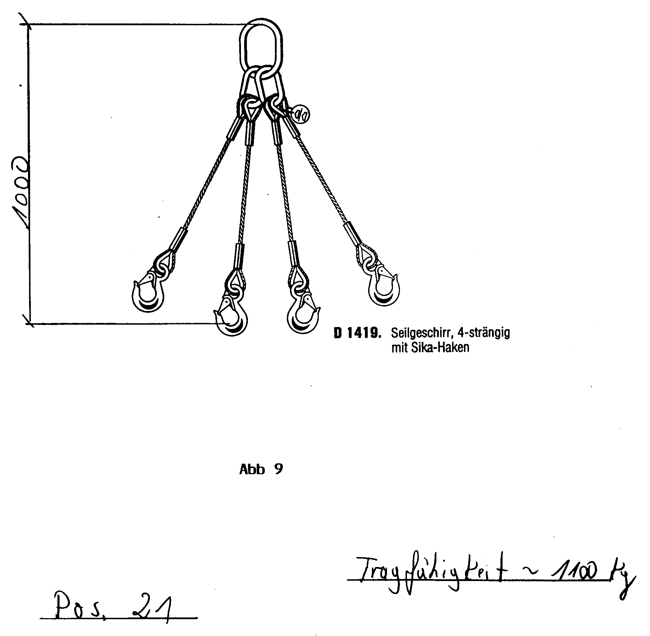

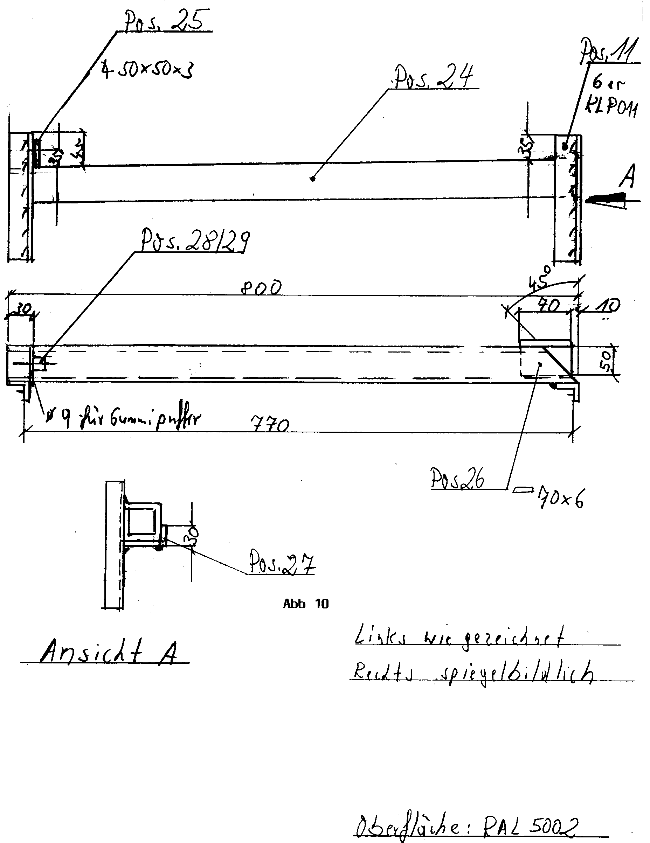

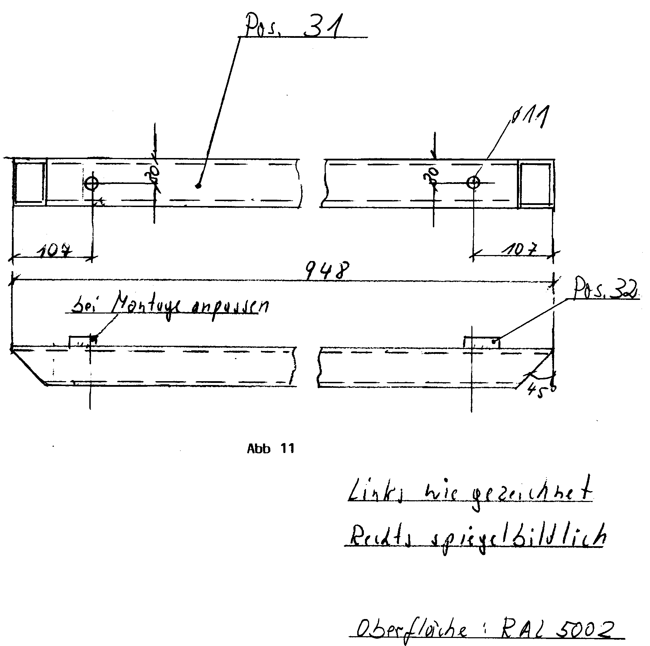

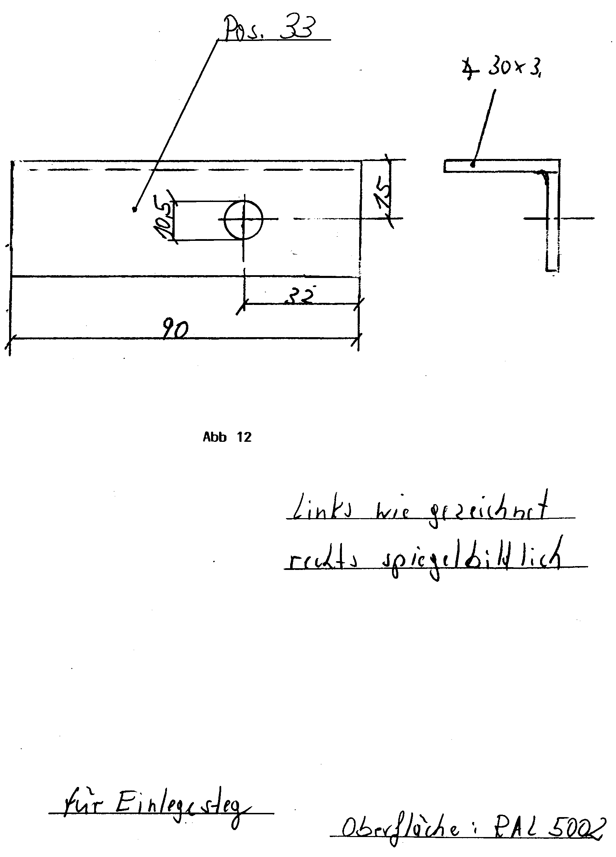

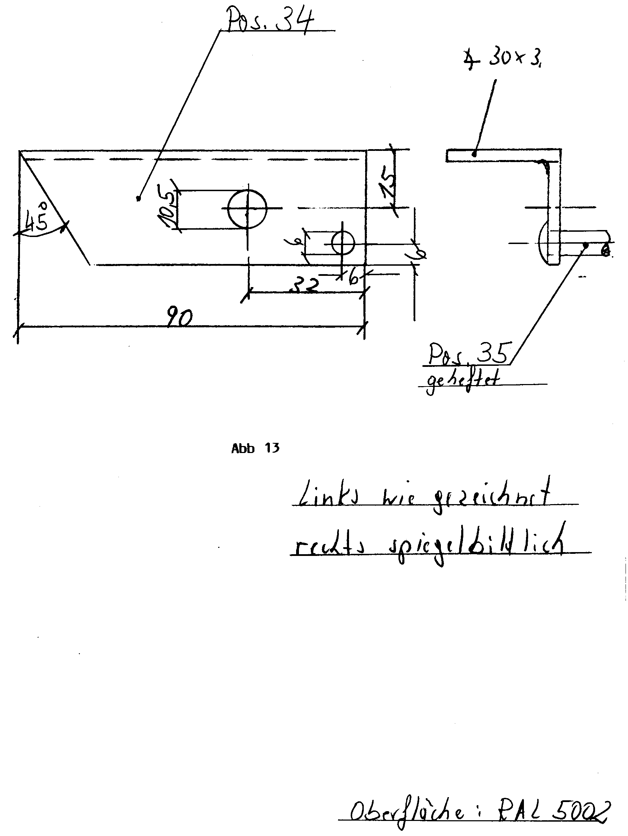

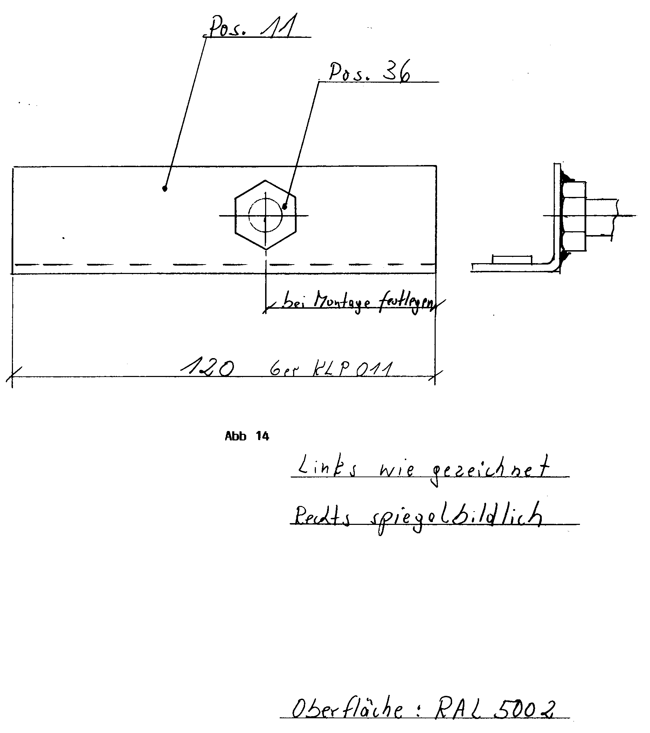

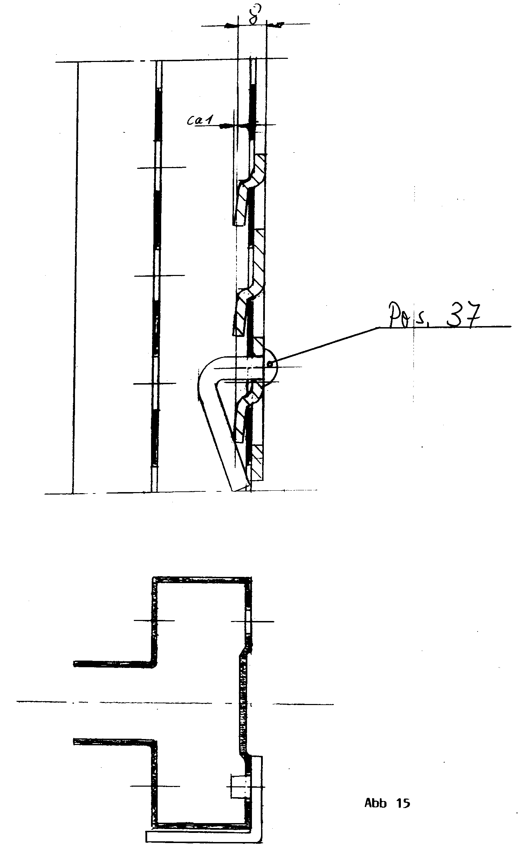

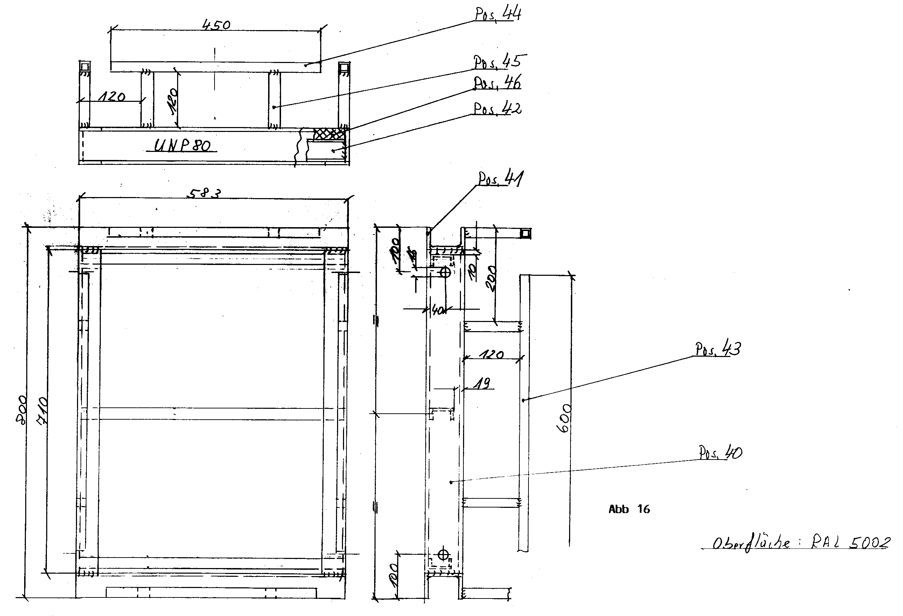

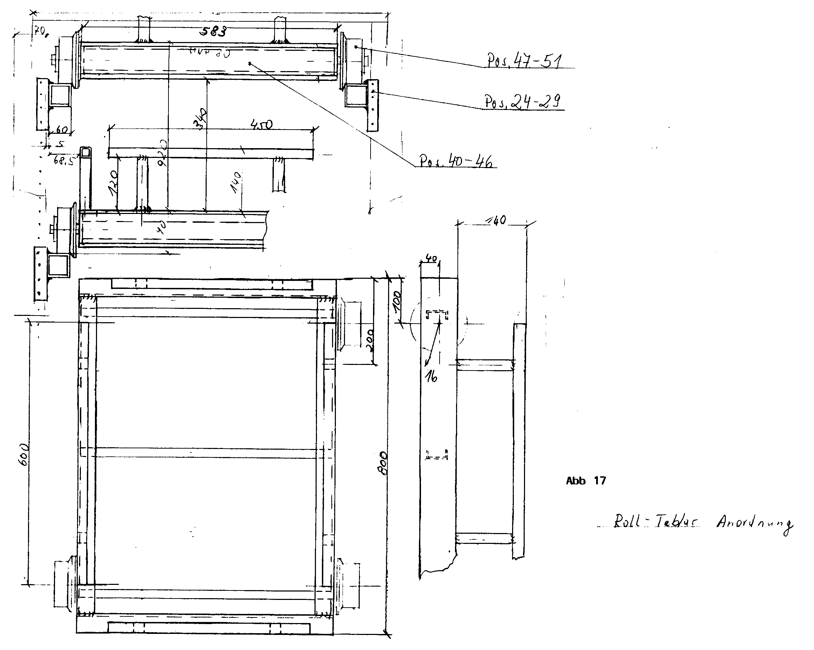

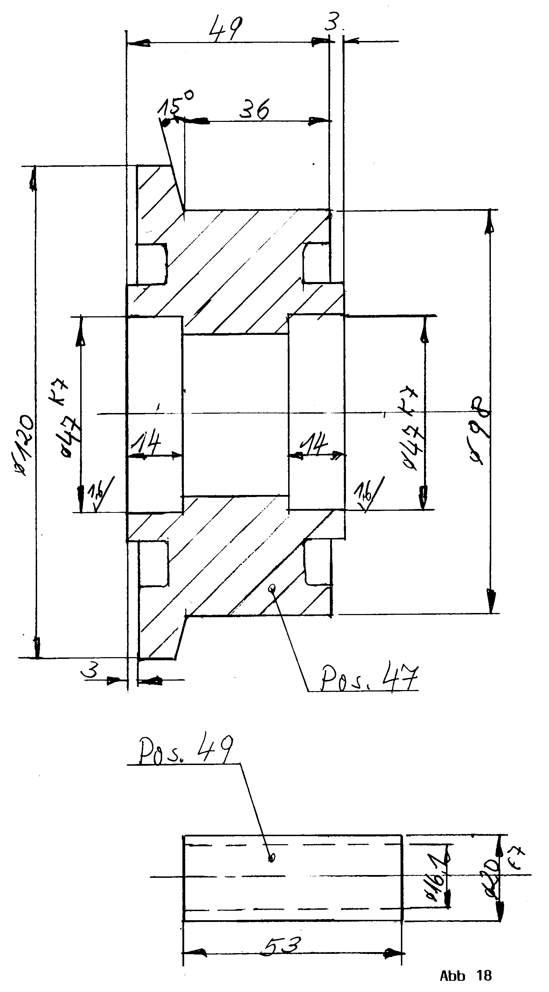

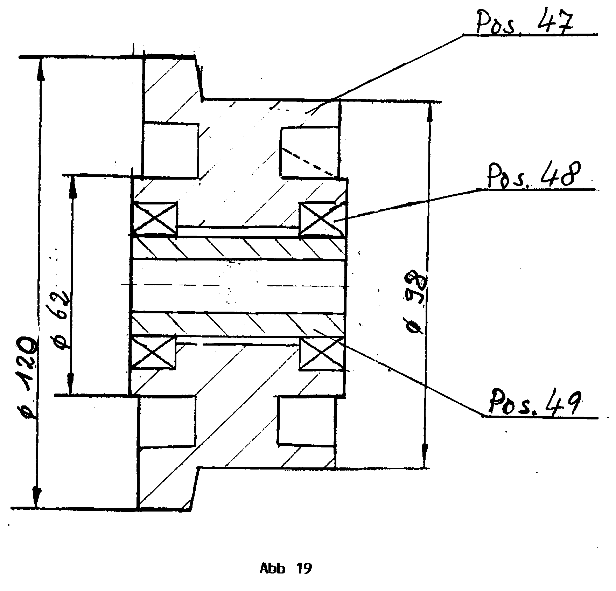

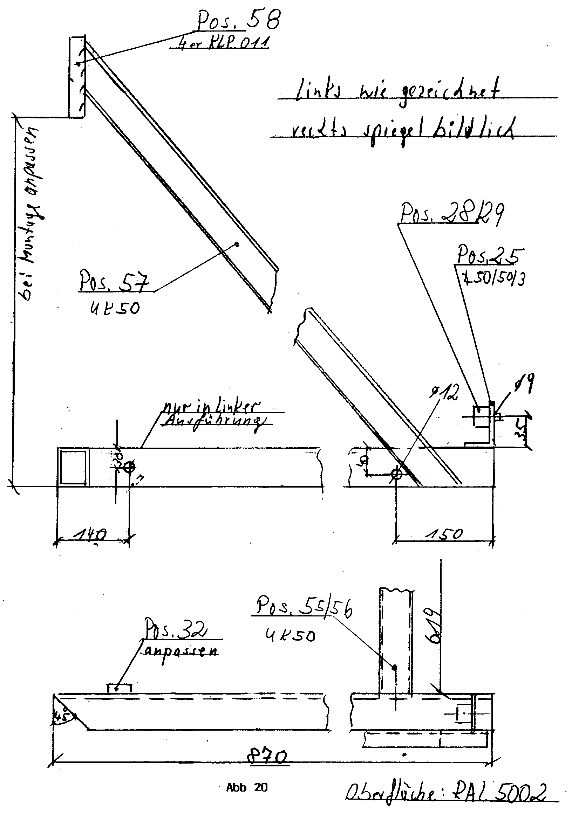

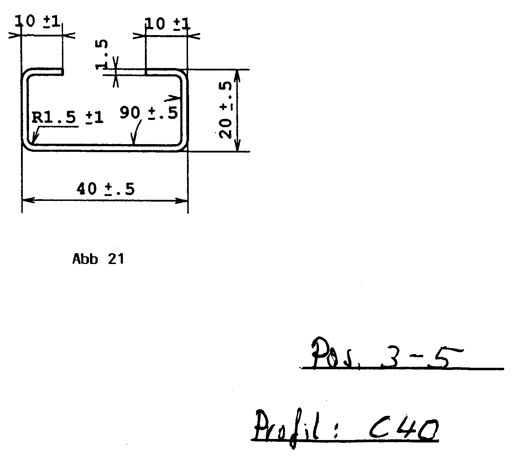

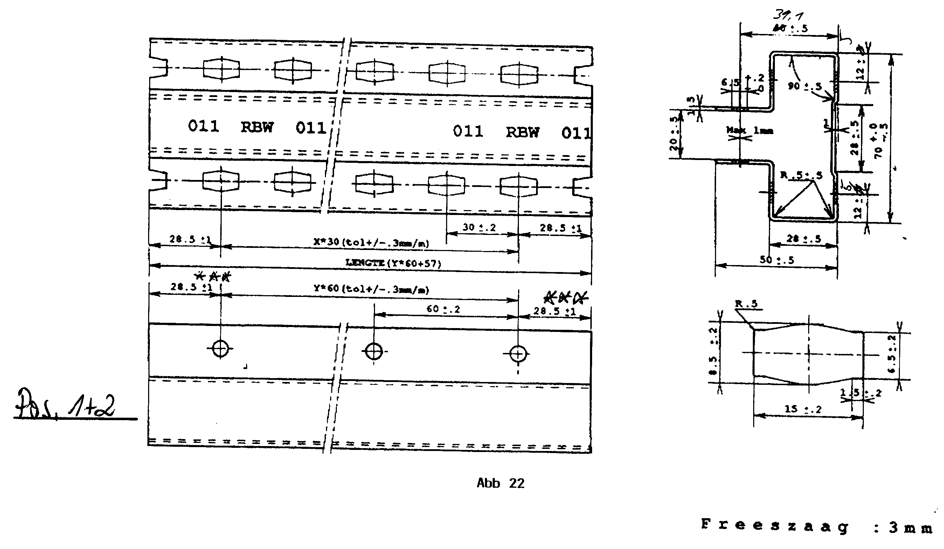

1. Im folgenden wird die Erfindung mit Bezug auf die beiliegende Zeichnung naher erläutert, wobei Abbildung 1 in stirnseitiger Vorderansicht ein erfindungsgemäßes Rolltablar-Steckregal zeigt und Abbildung 2 die Draufsicht eines erfindungsgemäßen Rolltablar-Steckregales zeigt.
In Abbildung 1 sind 2 Standrahmen links( 1 ) und rechts( 2 ) dargestellt. Diese sind in einem bestimmmten Abstand zueinander angebracht, der sich aus der Länge der oben eingehängten Traverse( 3 ), sowie der Bodenbefestigung mittels der unten am Standrahmen montierten Fußplatten( 4 ) ergibt. In den Standrahmen sind Laufschienen( 5 ) in bestimmten Abständen eingehängt, auf denen die Rolltablare( 6 ) bewegt werden.
Zur Entnahme der Rolltablare( 6 ) aus dem entsprechenden Fach, wird zwischen beiden Standrahmen( 1 u. 2 ) ein Laufschienenpaar( 7 ) welches an beiden Enden unter 45° angeschrägt ist, gelegt. Auf dieses Laufschienenpaar ( 7 )wird das Rolltablar( 6 )gezogen und durch eine Sperre gegen verschieben gesichert. Über eine Kranschiene,( 9 ) die unter den Traversen( 3 ) befestigt ist, wird mit einem elektrischen Ketten-Flaschenzug( 10 ) und einem Seilgeschirr( 11 ) das Rolltablar( 6 ) angehoben und außerhalb der Standrahmen( 1 u. 2 ) abgesetzt. Hier können die Rolltablare( 6 ) gestapelt werden, oder wenn sie mit entsprechenden. Werkzeugen bestückt sind, in einen Fertigungsprozeß eingeschleust werden.
Die Rolltablare( 6 ) bestehen aus einem Profilrahmen( 12 ) mit aufgesetztem Geländer( 13 ), angeschraubten Laufrollen( 14 ) und eingelegter Spanplatte.
In Abbildung 2 sind die Regalfelder, in diesem Fall je 6 Stück auf jeder Seite dargestellt. Die Feldbreite eines Feldes wird durch die Breite der Rolltablare bestimmt und durch 4 Stück Abstandshalter realisiert. Ebenfalls dargestellt ist ein herausgezogenes Rolltablar.
Bei Anordnung einer einseitigen Regalanlage wird zur Aufnahme eines herausgezogenen Rolltablares ein Schienengestell in die entsprechende Regalebene eingehängt. In dieser Ebene wird das Rolltablar dann bestückt und wieder eingeschoben.
